# EUROPEAN PATENT SPECIFICATION

(11) **EP 2 406 795 B1**
(45) Date of publication and mention of the grant of the patent: **25.04.2018**
(21) Application number: 10711253.4
(22) Date of filing: 12.03.2010
(51) Int. Cl.: C08J 5/20, C08L 1/08, C08L 1/26, C08L 1/28, C08L 33/08, C08L 33/10, C08L 89/06, G02F 1/15, H01B 1/12

(54) **ELECTROLYTE COMPOSITION**
ELEKTROLYTZUSAMMENSETZUNG
COMPOSITION ÉLECTROLYTIQUE

(30) Priority: 12.03.2009 GB 0904263
(43) Date of publication of application: 18.01.2012
(73) Proprietor: RISE Acreo AB, 164 25 Kista (SE)
(72) Inventor: BATTING, Adam Joseph Howard, Broadstairs Kent CT10 2LE (GB); OWEN, Timothy Geoffrey, Broadstairs Kent CT10 2LE (GB); SANDBERG, Mats, S-60217 Norrkoping (SE); SAWATDEE, Anurak, S-582 35 Linkoping (SE); WANG, Xin, S-603 51 Norrkoping (SE); MALMSTROM, Anna, S-603 51 Norrkoping (SE); NILSSON, Marie, S-618 33 Kolmarden (SE); HENNERDAL, Lars-Olov, S-70358 Orebro (SE)
(74) Representative: Gillard, Richard Edward
(86) International application number: PCT/GB2010/050435
(87) International publication number: WO 2010/103329

(56) References cited:
- EP-A1- 1 548 751
- WO-A1-2006/104701
- WO-A1-2008/062149
- WO-A2-2007/082067
- FR-A1- 2 893 427
- US-A1- 2005 231 785

## Description

This invention relates to an electrolyte composition and particularly to a printable electrolyte composition for application to an electrochromic and/or electrochemical device.

The present invention is directed to printable electrolyte compositions in the form of high-viscosity electrolyte liquids or gels. Electrolyte liquids and gels find wide technical application, but are particularly useful as electrolytes for printed electrochemical devices where they are able to maintain their structural integrity after deposition whilst exhibiting high conductivity.

Printable electrolytes may be formed into an ink having a suitable viscosity for printing which then partially dries to form a gel by the evaporation of the solvent. Alternatively, the electrolyte may be formulated with curable monomers and oligomers which cure to form the gel by cross-linking under suitable curing conditions, such as using actinic radiation. Alternatively, the gels may be pre-formed and held together by physical interaction such that the gel may be deposited by screen printing since the quasi solid state of a gel is strong enough to be immobile on the screen mesh, but when a shear force is applied by a squeegee, the gel shows fluid-like behaviour and passes through the mesh to be deposited on the substrate. See by way of example WO 2008/062149 which discloses a printable composition for application to an electrochromic and/or electrochemical device based on a thermally curable base, a solvent and an electrolyte, such as an ionic liquid.

Ionic liquids are attractive as electrolytes on account of their low vapour pressure, low toxicity, stability and ability to act as water-free electrolytes. There has been a great deal of effort expended in seeking suitable gelators/gellants for ionic liquids. It should be noted that one can distinguish between low-molecular "gelators" and polymeric "gellants".

A number of attempts have been made in the art to provide gelators/gellants for ionic liquids. The following documents disclose low-molecular weight gelators. N. Kimizuka et al., Langmuir 2001, 17, 6759-6761 discloses the spontaneous self-assembly of glycolipid bilayer membranes in sugar-philic ionic liquids and also reports the formation of gels. Kimizuka et al. modified the ionic liquid to allow the dissolution of carbohydrates therein followed by gelation using amide-group-enriched glycolipids. M.A. Firestone et al., Langmuir 2002, 18, 7258-7260 discloses the formation of a liquid-crystalline gel in a room-temperature ionic liquid by adding appropriate concentrations of water to 1-decyl-3-methylimidazolium bromide. K. Hanabusa, et al., Langmuir 2005, 21, 10383-10390 is entitled "Specialist gelator for ionic liquids" and discloses the use of cyclo(L-*β*-3,7-dimethyloctylasparaginyl-L-phenylalanyl) and cyclo(L-*β*-2-ethylhexylasparaginyl-L-phenylalanyl) for this purpose. A. Ikeda et al., Chem. Lett. 2001, 30(11), 1154 discloses the use of a cholesterol-based gelator. US 2005/0222277 discloses a ferrocene-containing gelling compound for use with an ionic liquid.

A number of approaches have also been disclosed using higher molecular weight gelators, including polymeric gellants, for ionic liquids. M. Yoshida et al., J. Am. Chem. Soc. 2007, 129, 11039 is entitled "Oligomeric electrolyte as multifunctional gelator" and discloses poly(pyridinium-1,4-diyliminocarbonyl-1,4-phenylene-methylene chloride) as the gellant. M.A. Klingshirn, et al., Chem. Mater. 2004, 16, 3091 discloses the gelation of ionic liquids using a cross-linked poly(ethylene glycol) gel matrix."

However, there remains a need in the art for further approaches which provide improvements over the prior art approaches, including improved properties of the resultant liquid/gel and electrochemical devices manufactured therefrom.

Accordingly, the present invention provides an electrolyte composition comprising: an ionic liquid; a gellant wherein the gellant is a cellulose derivative and the cellulose derivative is cellulose having alkyl, hydroxyalkyl and/or carboxyalkyl substituents; and a radiation-curable base comprising (a) a radiation-curable (meth)acrylate oligomer, (b) a (meth)acrylate monomer and (c) a photoinitiator; wherein the composition has a viscosity of 0.3 Pas or higher, measured at 25°C.

The Cellulose derivatives are non-hazardous low-cost polymers which increase the viscosity of the ionic liquid and which may be used to produce electrochemical devices having short switching times. The resulting liquids/gels are stable for long periods and are tolerant to the presence or absence of water/humidity over a wide range.

The present invention will now be described with reference to the drawings, in which:
Fig. 1 shows the electrochemically produced pattern for a one-pixel electrochromic display;
Fig. 2 shows how the electrolyte of the present invention should be printed; and
Fig. 3 shows an electrochemical device incorporating the electrolyte of the present invention.

The electrolyte composition of the present invention comprises an ionic liquid and a cellulose derivative as a gellant.

Ionic liquids are known materials in the art, see, for example, the following review articles: C.L. Hussey, Adv. Molten Salt Chem. 1983, 5, 185 and T. Welton Chem. Rev. 1999, 99, 2071-2083. They may also be termed non-aqueous ionic liquids, liquid organic salts, molten salts and fused salts. They are all seeking to define a liquid in the form of fused salts essentially containing only ions. The term "essentially" here is included because it is known in the art that small amounts of nonionic materials, such as absorbed water, may be present without adversely affecting the properties of the ionic liquid. In addition, some covalent character may be present in the anion-cation bonds without adversely affecting the conductive properties.

The ionic liquid must be liquid at a usable temperature and hence a low melting point is critical (such as below 100°C). Preferably the ionic liquid has a melting point below 40°C and more preferably is a room-temperature ionic liquid (i.e. it is a liquid at or below 25°C).

To date, most ionic liquids contain at least one organic component. These are principally alkylammonium, alkylphosphonium, *N*-alkylpyridinium, or *N,N'*-dialkylimidazolium cations (e.g. 1-ethyl-3-methylimidazolium cation ([EMIM]⁺) is the 1-butyl-3-methylimidazolium cation ([BMIM]⁺)). Specific examples include [EMIM]Cl, [BMIM]Cl, [EMIM][BF₄] (which has a melting point of 12°C), [EMIM][PF₆] (which has a melting point of 60°C), [EMIM] thiocyanate, [EMIM] nonafluorobutanesulfonate, [EMIM] bis((trifluoromethyl)sulfonyl) imide, [EMIM] tris((trifluoromethyl)sulfonyl)methide, [EMIM] trifluoroacetate, [EMIM] heptafluorobutanoate, tetraalkylammonium tetraalkylboride, 1-alkyl-3-methylimidazolium trifluoromethanesulfonate, monoalkylammonium nitrate and tetraalkylammonium sulfonate. Others include halogenoaluminate(III) and chlorocuprate(I). Details of the preparation of these materials may be found in T. Welton Chem. Rev. 1999, 99, 2071-2083. Many are also commercially available, e.g. from Sigma-Aldrich.

The ionic liquid may contain one salt or mixture of salts. Where mixtures are used, the melting point criteria set out hereinabove apply to the mixture. Thus, the term "ionic liquid" includes a solution of an ionic solid dissolved in another ionic liquid (e.g. LiClO₄ dissolved in [BMIM] [BF₄])

The composition of the present invention also contains a gellant. A gellant is a polymeric material which provides the gel-like properties. The terms "gelator" and "gellant" are often used interchangeably, but strictly speaking, the gelator relates to low molecular weight materials and a gellant relates to polymers. Thus, given that the gelling material of the present invention is polymeric, the term "gellant" is more appropriate. The gellant is a cellulose derivative.

The cellulose derivative is based on a cellulose polymer backbone having side-chain substituents. Cellulose itself is a well-known naturally occurring polymer. Cellulose has the formula (C₆H₁₀O₅)ₙ, and is a polysaccharide consisting of β(1→4) linked D-glucose units. It typically forms a linear chain of several hundred to over ten thousand glucose units. It has the following formula:

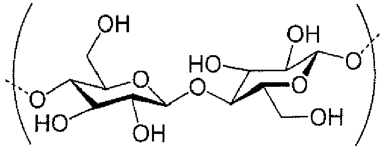

The free hydroxyl groups may be further functionalised and the term "cellulose derivative" used herein means cellulose derivatised via the free hydroxyl groups on the polymer backbone.

It has alkyl, hydroxyalkyl and/or carboxyalkyl substituents. The alkyl moiety is preferably C₁₋₆ alkyl, more preferably C₁₋₃ alkyl. More preferably the cellulose has carboxymethyl, hydroxyethyl and/or hydroxypropyl substituents, most preferably the cellulose derivative is 2-hydroxyethyl cellulose.

The nature of the substituents will depend on the nature of the ionic liquid. Hydroxyalkyl and/or carboxyalkyl substituents are preferred with hydrophilic ionic liquids, such as [EMIM]⁺ and [BMIM]⁺, whereas alkyl substituents are preferred with hydrophobic ionic liquids, such as 1-butyl-3-methyl-imidazolium bis((trifluoromethyl)sulfonyl)amide (BMI⁺Tf₂N⁻).

The substitution of the hydroxyl groups is statistical and the precise substitution pattern is not material to the present invention. The same substituent may also be present more than once at a single position. For example, in the case of hydroxyethyl and hydroxypropyl cellulose, the cellulose is ethoxylated/propoxylated using ethylene or propylene oxide converting the hydroxyl groups of the cellulose into hydroxyethyl or hydroxypropyl ether groups. These hydroxyethyl or hydroxypropyl ether groups may undergo further reaction with the ethylene or propylene oxide to provide poly(ethylene oxide) or poly(propylene oxide) side chains.

The weight average molecular weight of the cellulose derivative is preferably 10,000 to 250,000, more preferably 50,000 to 150,000. The degree of substitution with alkyl, hydroxyalkyl and/or carboxyalkyl substituents is preferably 0.5 to 10 alkyl, hydroxyalkyl and/or carboxyalkyl groups per glucose ring, more preferably 1 to 5.

The electrolyte composition may be prepared by combining the ionic liquid and the gellant, optionally with stirring. The mixture may also need to be heated to dissolve the gellant. The temperature may be from room temperature (25°C) up to 150°C, more preferably up to 80°C.

The resultant electrolyte composition has a viscosity of 0.3 Pas or higher, preferably 0.5 Pas or higher, and most preferably 1.5 Pas or higher when measured at 25°C, for example using an AND SV-10 or SV-100 Vibro Viscometer. SV-Series Vibro Viscometers measure viscosity by detecting the driving electric current necessary to resonate the two sensor plates at a constant frequency of 30 Hz and amplitude of less than 1 mm. The SV-10 is designed for lower viscosity liquids (0.3-10,000 mPas) whereas the SV-100 can measure higher viscosities (1-100 Pas). The upper limit is less critical given that it is beneficial to produce a gel. Indeed, in a preferred embodiment, the electrolyte composition is a gel. Although a gel is difficult to define (see, for example, E. Carretti et al., Soft Matter, 2005, 1, 17-22), for the purpose of the present invention, the gel experiences no flow after 30 seconds, preferably after 1 min and most preferably after 5 mins at 25°C under the tube inversion test. The tube inversion test uses a glass tube having a constant inner diameter of 45 mm which is charged with 20 g of the material being tested. The bottle is tilted by 90° and the presence or absence of flow is determined visually.

The electrolyte composition of the present invention may find utility without further processing, particularly in the case where it is a gel. For example, gels may be used in solar cell applications. However, the electrolyte composition of the present invention is preferably used as a printable composition.

Although the primary purpose of the electrolyte composition is to be conductive over the lifetime of the device, printability is also an important factor. It is relatively straightforward to produce a conductive electrolyte, but to combine this with a long lifespan and printability is a more complex problem. One important parameter for the printability is the viscosity of the electrolyte composition. If the viscosity is too low, the printed electrolyte will not be confined to the desired area. If the viscosity is too high, there might be difficulties in feeding the electrolyte through the printing device. Thus, the viscosity of the printable electrolyte composition is preferably adapted to the intended printing device. Preferably, the viscosity is at least 0.3 Pas (0.1 Pas is equivalent to 1 poise), or more preferably at least 0.5 Pas, when measured at 25°C, prior to curing, such that it can be printed by means of screen printing. The upper limit of the viscosity for screen printing applications is preferably 50 Pas, more preferably 30 Pas and most preferably 10 Pas. Normally, if a composition with a lower viscosity is used for screen printing, the same area has to be printed repeatedly in order for an electrolyte with the desired/working thickness to be reached. Viscosity may be determined using a Sheen Rotothinner available from Sheen Instruments operating at a shear rate of 80 s¹. The control over the viscosity may be achieved by balancing the amount of oligomer and thickening agent (increases the viscosity), and the monomer and water or solvent (decrease the viscosity).

The electrolyte may be printed using a range of printing methods including flexo, screen, offset and gravure printing. Screen printing is particularly preferred.

In the printing process it is common to consider the electrolyte as a type of ink. The electrolyte composition may be printed itself, alternatively, it may be formulated with a suitable vehicle. A suitable vehicle for the ink is disclosed in WO 2008/062149. As in WO 2008/062149, the electrolyte composition of the present invention further comprises a curable base, which preferably comprises (a) a curable (meth)acrylate oligomer, (b) a (meth)acrylate monomer and (c) a photoinitiator.

In a preferred embodiment, the present invention provides a printable electrolyte for the production of electrochemical devices comprising: (i) 20-90% by weight, based on the total amount of the printable electrolyte, of the curable base and 10-70% by weight, based on the total amount of the printable electrolyte, of the electrolyte composition, wherein the printable electrolyte has a viscosity of 0.3 Pas or higher.

The curable base is radiation-curable. The actinic radiation is preferably UV radiation.

The radiation-curable base contains a radiation-curable (meth)acrylate oligomer, a (meth)acrylate monomer and a photoinitiator. The composition contains at least 20% by weight, preferably at least 30% by weight and most preferably at least 35% by weight, and 50% or less by weight, preferably 45% or less by weight, of curable base based on the total amount of the composition. According to one embodiment the oligomer is present at 40-95% by weight, based on the total amount of the curable base. The radiation-curable (meth)acrylate oligomer is a curable oligomeric component and such materials are commercially available. One or more oligomers may be used. The oligomer may be selected from a polyester (meth)acrylate, an epoxy (meth)acrylate, a urethane (meth)acrylate or mixtures thereof. A urethane (meth)acrylate is particularly preferred and examples include Craynor CNSP061 (an aliphatic urethane acrylate supplied by Sartomer having Mw 7800), Craynor CNSP066 (an aliphatic urethane acrylate supplied by Sartomer having Mw 6000), Photocryl DP266 (an 80:20 mix of aliphatic urethane acrylate and DPGDA supplied by PC Resin GmbH) and IRR569 (an acrylated resin supplied by Cytec).

The term "oligomer" has its standard meaning in the art, namely that the component is partially polymerised to form a pre-polymer which is capable of further polymerisation. The oligomers of the present invention has a weight-average molecular weight (Mw) of 500-25,000. Preferably the weight-average molecular weight is 750 or higher and most preferably 1000 or higher. Preferably the weight-average molecular weight is 15,000 or less, more preferably 10,000 or less and most preferably 8,000 or less. The Mw may be measured by known techniques in the art, such a gel permeation chromatography (GPC).

A suitable GPC apparatus for measuring Mw is an LC instrument having the following parameters - Column set: MiniMix E or MiniMix D (depending on molecular weight), Eluent: THF, Detector: UV/vis and/or ELS, Calibration: conventional versus polystyrene. This approach is applicable to polymers having a Mw of 400-400,000.

The oligomer may be mono or multifunctional (preferably di, tri, or tetrafunctional). Mono and multifunctional are intended to have their standard meanings, i.e. one and two or more groups, respectively, which take part in the polymerisation reaction on curing. Such materials are well-known in the art.

The composition preferably contains 40 to 95% by weight of oligomer based on the total weight of the curable base. Preferably the composition contains at least 50% by weight and most preferably at least 60% by weight, based on the total weight of the curable base. Preferably the composition contains 90% or less by weight and most preferably 85% or less by weight, based on the total weight of the curable base.

The composition of the present invention also contains one or more radiation-curable (meth)acrylate monomers. The monomer may be multifunctional or monofunctional or a mixture thereof. Mono and multifunctional are intended to have their standard meanings, i.e. one and two or more groups, respectively, which take part in the polymerisation reaction on curing. Such materials are well-known in the art.

Examples of the multifunctional acrylate monomers which may be included in the composition of the present invention include hexanediol diacrylate, trimethylolpropane triacrylate, pentaerythritol triacrylate, polyethylene glycol diacrylate, for example, tetraethylene glycol diacrylate), dipropylene glycol diacrylate, tri(propylene glycol) triacrylate, neopentyl glycol diacrylate, bis(pentaerythritol) hexaacrylate, and the acrylate esters of ethoxylated or propoxylated glycols and polyols, for example, propoxylated neopentyl glycol diacrylate, ethoxylated trimethylolpropane triacrylate, and mixtures thereof.

In addition, suitable multifunctional acrylate monomers include esters of methacrylic acid (i.e. methacrylates), such as hexanediol dimethacrylate, trimethylolpropane trimethacrylate, triethyleneglycol dimethacrylate, diethyleneglycol dimethacrylate, ethyleneglycol dimethacrylate, 1,4-butanediol dimethacrylate.

The monofunctional (meth)acrylate monomers are also well known in the art and are preferably the esters of acrylic acid. Preferred examples include phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA) and lauryl acrylate

Mixtures of (meth)acrylates may also be used. The molecular weight is typically below 500.

The total amount of the (meth)acrylate monomer present in the composition is preferably at least 3% by weight, more preferably at least 5% by weight, based on the total weight of the curable base, and preferably no more than 30% by weight, more preferably no more than 25% by weight, most preferably no more than 20% by weight based on the total weight of the base. According to one embodiment the monomer is present at 3-30% by weight, based on the total amount of the curable base.

(Meth)acrylate is intended herein to have its standard meaning, i.e. acrylate and/or methacrylate.

In addition to the monomers described above, the radiation-curable base include a photoinitiator, which, under irradiation, for example with UV light, initiates the polymerisation of the monomers and oligomers. Preferred are photoinitiators are free radical photoinitiators, such as benzophenone, 1-hydroxycyclohexyl phenyl ketone, 2-benzyl-2-dimethylamino-(4-morpholinophenyl)butan-1-one, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure, Darocur (from Ciba) and Lucerin (from BASF). The wavelength of the radiation and the nature of the photoinitiator system used must of course coincide.

The photoinitiator may be used in the presence or absence of a synergist. Preferably the composition does not contain a synergist. Amine-containing synergists have a tendency to discolour the composition and should preferably be avoided.

Preferably the photoinitiator is present from 1 to 20% by weight, preferably from 8 to 12% by weight, of the curable base.

Preferably, the composition may also contain a wetting agent. Examples include silicone oils, such as Dow Corning 200, 300, etc; modified siloxanes, modifications include amino, polyester, polyether, available from Tego, BYK Chemie etc.; fluoro surfactants, such as Zonyl FSN available from DuPont; mineral oils, such as BYK-035 available from BYK Chemie; nonionic organic surfactants such as Tego Wet 510 from Tego; and polymeric additives, such as acrylic copolymers such as Modarez MFP from Synthron. The wetting agent improves the planerisation and the split of the printed ink. Preferably the wetting agent is present from 0.1 to 20% by weight, preferably from 1 to 10% by weight, of the curable base.

The composition may contain a solvent, e.g. an organic solvent or water; however, it is not essential. The composition disclosed in WO 2008/062149 (and discussed hereinabove) requires water or another solvent for sufficient thickening and stability whereas in the composition of the present invention, the viscosity is provided by the presence of the thickener and hence does not need water or other solvents (see Example 4 hereinbelow). If present, the solvent forms part of the liquid vehicle of the composition and is preferably present at less than 20% by weight and more preferably less than 10% by weight and most preferably less than 5% by weight based on the total weight of the composition. The solvent might be an organic solvent or water, or a combination an organic solvent and water. The weight limitations apply to the total weight of the organic solvent and water if both are present.

For UV-radiation curable electrolyte compositions suitable solvents, besides water, may be glycol ethers and glycol ether acetates. Preferably, the solvent is highly oxygenated such in order to prolong the lifetime of the UV radiation source, by avoiding the build up of carbon deposits on the external surface of the UV radiation source.

According to one embodiment the composition of the present invention is transparent after curing. This is advantageous when the display is viewed through the electrolyte and maximum contrast is desired. Since the electrolyte is used as part of an electrochromic device and the cured electrolyte must be sufficiently transparent to allow the user to see the colour change in the conductive film below. By transparent is meant transparent to the user, i.e. under visible light. Accordingly, the composition is substantially free of colouring agents, including both dissolved and dispersed colouring agents (pigments, dyes etc). By substantially free is meant that traces of colouring agents may be tolerated provided they do not interfere with the visualisation of the colour change occurring in the conductive film. Considerable effort has been expended in finding materials which have the balance of printability and electrolytic properties but which are still transparent after curing.

According to another embodiment, the electrolyte is non-transparent or semi-transparent. Such electrolytes are normally not used for the display applications where the display is viewed through the electrolyte, but for other display applications and for other types of electrochemical components.

Other components of types known in the art of ink formulation may be present in the thermally curable or radiation curable compositions to improve the properties or performance. These components may be, for example, defoamers, rheology modifiers, synergists for the photoinitiator, stabilisers against deterioration by heat or light, reodorants, biocides etc. The requirement for transparency must, however, be met.

The composition of the invention may be prepared by known methods such as, for example, stirring with a high-speed water-cooled stirrer, or milling on a horizontal bead-mill.

In a preferred embodiment, the electrolyte composition of the present invention may be incorporated in to an electrochemical device. Accordingly, the present invention provides an electrochemical device comprising the composition as defined herein, as well as a use of the composition for manufacturing an electrochemical device.

The electrochemical device of the present invention is of standard construction and typically comprises: a substrate; a first and a second layer of electrically conductive and electrochemically active material, which are spatially separated from each other and carried by the substrate; an electrolyte composition as defined herein which ionically connects the first and the second layer, wherein the redox state of the first layer is controllable by means of a voltage applied across the electrolyte composition, and wherein the first layer is arranged such that a change of redox state alters the electrical conductivity of the first layer.

The method of manufacturing the electrochemical device comprises the steps of: providing a substrate; arranging a first and a second layer of electrochemically active material on the substrate, wherein the layers are spatially separated from each other; printing a layer of the electrolyte composition as defined herein, in ionic contact with both the first and the second layer of electrochemically active material, such that the first and second layers are ionically connected.

Preferably, the substrate is flexible; it may be composed of paper or plastics or a combination thereof.

The device may have a vertical structure, wherein the electrolyte composition is sandwiched between the first and second layers of electrochemically active material. This is advantageous as a vertical structure normally provides a less energy consuming device with faster switching times. The shorter response times are principally due to the average ion path between the first and second layers being shorter. Alternatively the device may have a lateral structure, i.e. the electrolyte composition is in ionic contact with a respective surface of the first and second layers, wherein the surfaces face the same direction. In other words, in a lateral structure the first layer of electrochemically active material is arranged to the side of a second layer of electrochemically active material. According to one embodiment, the first and second layers are arranged in a common plane.

Preferably, the electrolyte composition overlaps or covers at least a respective portion of the first and second electrochemical layer. According to one embodiment the electrolyte composition covers only a portion of the first layer and only a portion of the second layer. According to an alternative embodiment the electrolyte composition covers substantially the whole of the first and/or second layer.

Optionally, two or more electrochemical devices may be stacked on top of each other, wherein two neighbouring devices preferably are separated by an isolating layer.

The at least one of the first and second layer is preferably arranged of electrically conductive polymer, which may or may not be electrochromic. The electrically conductive polymer is preferably arranged as a conductive polymer film.

Electrically conductive polymers are well-known materials typically incorporating a linear chain of conjugated units which becomes highly conductive on doping. Many conjugated polymers can undergo reversible electrochemical oxidation and reduction through the application of a positive or negative bias in the presence of an electrolyte. When switching a conjugated polymer between its oxidation and reduction states the fundamental electronic and optical structure of the polymer changes. The electronic structure change makes the conductivity change from, for example, nearly insulating to a conductive material, or vice versa. For electrochromic polymer materials the change in conductivity also provides a change in the optical properties of the polymer, i.e. provides a change in its colour (termed electrochroism). This ability makes conjugated polymers a good choice for creating displays. The optical and electronic change of the polymer depends on the material and its doping level.

A wide range of suitable conducting polymers is available, which may or may not be electrochromic. An example is the conducting polymer poly(3,4-ethylenedioxythiophen) doped with poly(styrene sulfonic acid) (PEDOT:PSS). In the reduced state a PEDOT:PSS film has a low conductivity and a deep-blue colour; in the oxidised state the conductivity is high and the colour nearly transparent.

US 7,012,306 provides basic examples which describe how electrochemical components such as transistors, displays and logical circuits may be arranged and manufactured using electrochemically active elements, e.g. conductive polymers and an electrolyte composition. Essentially, two elements of electrically conductive and electrochemically active material are arranged adjacent to each other. An electronically insulating gap between the two elements is bridged by an electrolyte. Further, the electrolyte provides ionic contact between the two elements. As a voltage is applied across the electrolyte the conductivity of the electrochemically active material is changed at the interface between the electrolyte and the conductive material. Thus, a current in the electrochemically active material can be controlled by means of a voltage applied to the electrolyte. US 7,012,306 gives further examples of how to arrange and manufacture other components based on the same principle.

In one example of a technique for the manufacture of an electrochromic device, a conducting polymer film is applied to a suitable substrate. A pattern is then formed in the film by irreversibly over oxidising or reducing the conducting polymer in certain defined areas. The thus-treated polymer film is then over-printed with an electrolyte layer and the electrolyte layer is subsequently encapsulated. See US 2005/0068603 for further details.

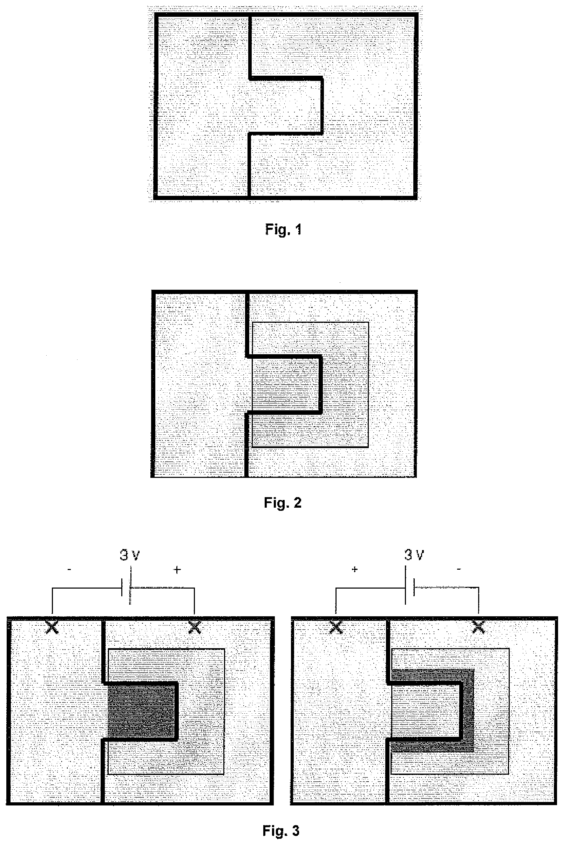

There are a number of well known techniques for forming an electrochemical device involving the application of an electrolyte and optionally encapsulating the device - see US 7,012,306, WO 03/25953 and WO 05/27599. The following provides a specific example of the manufacture an electrochemical component. Further details may be found in WO 2008/062149. The first step in the printing process is a subtractive patterning technique. Here, a pattern with non-conducting lines is created in the conducting PEDOT:PSS film. These lines define the conducting areas of the display. The typical thickness of the lines is 100-200 µm. Fig. 1 (reproduced from Fig. 1 in WO 2008/062149) shows the electrochemically produced pattern for a one-pixel electrochromic display. The black lines are the electrochemically produced pattern. The patterning is performed with an electrolyte ink (often termed "killyte"). The killyte is grounded and the PEDOT:PSS film is connected to a power supply (e.g. 150 V). The killyte is then applied to the PEDOT:PSS film using a suitable printing technique, such as screen printing. As the killyte comes in contact with the PEDOT:PSS film, the circuit is closed. The high potential creates a large current which overoxidises the PEDOT:PSS in an irreversible process. The overoxidation permanently deactivates the conductivity of the PEDOT:PSS areas contacted by the killyte. The killyte is then processed to ensure that it will not stick or dry on other pieces of equipment. As an alternative to the use of killyte, a conducting polymer film may be printed directly on to the substrate.

In the next step an electrolyte composition is applied to the substrate. This step is performed in a manner similar to the electrochemical patterning. The two main differences are that no voltage is applied and that the electrolyte pattern is considerably larger. Fig. 2 (again, taken from WO 2008/062149) illustrates how the electrolyte (represented by the darker area in Fig. 2) should be printed, i.e. the electrolyte bridges a gap between a first and a second layer of electrochemically active material, such that the two layers are in ionic contact with each other. For good device performance it is important that the electrolyte does not touch the two vertical electrochemical patterning lines to the left.

The substrate is then preferably encapsulated. Encapsulation can be performed on both wet and cured electrolyte. Encapsulation is the last step before cutting the repeated patterns into individual pages. With good encapsulation the display will be protected from external stress. Encapsulation also provides a barrier for protection against dehydration of the electrolyte.

The electrochemical device or the one-pixel electrochromic display described hereinabove is a simple electrochemical cell containing two PEDOT:PSS electrodes connected via an electrolyte. When a potential is applied between the electrodes an electronic current in the electrodes is converted to an ionic current in the electrolyte via electrochemistry occurring at both electrodes at the same time. This current will continue to flow until the electrochemical capacity of one of the electrodes has been consumed. Fig. 3 (taken from WO 2008/062149) shows such a device. The PEDOT in the anode (positively addressed here) is further oxidised (from the partially-oxidised initial state) so that it becomes more conductive and optically transparent. On the other hand, the cathode (negatively addressed here) is reduced and becomes less conductive and obtains an opaque deep blue colour (shown as the darker areas in Fig. 3). The electrochemical reaction normally starts in a portion of the electrochemically active material where the electrolyte covered separation between the two layers is most narrow, i.e. where the ion path between the two electrochemically active layers is the shortest.

The left-hand picture in Fig. 3 shows the pixel switched the correct or most normal way. The cathode (negatively addressed here) under the electrolyte turns blue due to reduction when a potential of 3 V is applied. When the whole cathode is reduced the electrochemical reaction ceases. By reverting the potential, the ion transport will run in the opposite direction and a switched pixel, as illustrated in Fig. 2, may be switched back to its initial or neutral state; unless the previous reaction has irreversibly oxidised portions of the electrochemically active layer. The right-hand picture shows how the display starts to be coloured when the reaction continues from the neutral state when the potential is applied in the reverse direction compared to the situation illustrated in the left-hand picture. In this example, the minimum applied voltage for making a switch is from 0.6 to 0.9 V. The necessary voltage depends e.g. on the selected materials and their sizes.

The electrochromic device described hereinabove has a memory; it is bi-stable. This means that when the potential is removed from the display, it stays switched for up to several hours. The length of the memory time depends on the leakage current between the electrodes. This bi-stability makes it ideal for low-power applications.

Of the two electrolytes used in the process described hereinabove, the second electrolyte must retain its electrolytic function for the lifetime of the device in order for the device to be able to change its electrochemical and/or electrochromic (i.e. optical) state. Throughout the lifetime of the device, therefore, the electrolyte must allow for the confined transport of ions within the device.

Optionally, the device may be provided with an encapsulation covering the electrolyte, e.g. in such a manner as described in WO 2008/062149. The two most preferred encapsulation techniques used are varnishing and lamination. The printing of a varnish is advantageous as it facilitates the application of the protective layer locally on the substrate. Laminates are advantageous as they some times are easier to handle. By way of an example, polypropylene (PP) tape may be laminated over the electrolyte. Preferably, the encapsulation protects the device from deteriorating interaction with UV-radiation. A protection against UV-radiation can be achieved by adding UV-absorbers to the varnish, or by using an UV-absorbing laminate as encapsulation. Further, the encapsulation is preferably flexible and compatible with rest of the components.

The composition described in relation to the above aspects of the invention allows for the printing or deposition of an electrolyte that is available for use almost instantly, is mechanically stable, has good adhesion to, for example, a layer of conductive polymer and provides an electrochromic device and/or electrochemical device having a long lifetime and good performance (short switch time) under all ambient conditions (in particular low relative humidity).

According to an alternative manufacturing process the electrolyte composition is provided on the substrate, before the electrochemically active material is arranged thereon.

The electrolyte composition of the invention will now be described, by way of example, with reference to the following examples (parts given are by weight).

### Examples

### Materials and methods

Hydroxyethyl cellulose (HEC), product number 434965, was purchased from Sigma-Aldrich. Jelly glue Plakal 375 was supplied by Firma Haecker. Jelly glue Anicol was supplied by Limgrossen, Norrköping, Sweden. 1-Ethyl-3-imidazolium ethyl sulfate (EMIM-ES), tris(2-hydroxyethyl)methylammonium methylsulfate, (MTEOA-MS), polyethylene glycol 200, and anhydrous glycerol were supplied by Sigma-Aldrich. Titanium dioxide was supplied by Alfort & Cronholm, Stockholm, Sweden.

The viscosity of the EMIM-ES as received and used was measured as 0.13 Pas at 20.6°C.

Viscosity measurements were carried out on an AND SV-10 Vibro Viscometer using a glass container for the liquid. See J. Jacquemin et a!., Green Chem., 8, 172, 2006 and A. Fernandez et al., J. Chem. Eng. Data, 53, 1518, 2008 for further details.

### Reference Example 1

A 2.5% suspension of hydroxy ethyl cellulose (HEC) in EMIM-ES, prepared by stirring 0.50 g HEC into 19.51 g EMIM-ES in a screw-capped glass bottle, was placed in a water bath maintained at 80°C. After one hour of heating in a capped bottle under stirring with a magnetic stirring bar, a viscous slightly brown clear liquid had been formed. The bottle was taken out of the water bath and was held at room temperature for two hours before the viscosity was measured as 1.59 Pas at 20.1°C. After standing for two more hours at room temperature, the viscosity was measured as 1.70 Pas at 20.4°C, a viscosity value that remained stable for the following 21 hours.

### Reference Example 2

A 5 % suspension of HEC in EMIM-ES, prepared by stirring 1.01 g HEC into 19.03 g EMIM-ES in a screw-capped glass bottle, was placed in a water bath maintained at 80°C. After one hour of heating in a capped bottle under stirring with a magnetic stirring bar, a brown clear syrupy liquid was formed. The bottle was taken out of the water bath and was held at room temperature for four hours before the viscosity was measured as 6.55 Pas at 21.0°C. After standing for a further 16 hours, the viscosity was 6.86 Pas at 19.8°C.

### Reference Example 3

A 10 % suspension of HEC in EMIM-ES, prepared by stirring 2.00 g HEC into 18.04 g EMIM-ES in a screw-capped glass bottle, was placed in a water bath maintained at 80°C. After one hour of heating in a capped bottle under stirring with a magnetic stirring bar, a brown highly viscous fluid was formed. The bottle was taken out of the bath and the liquid gelled as it cooled to room temperature. The gel state was confirmed by tilting the bottle, having an inner diameter of 45 mm, 90° and observing no flow for five minutes.

### Example 4 (according to the invention)

The composition from Example 1 was scaled up: 2.7 g HEC was dissolved in 90 g EMIM-ES at 80°C. The resulting gelled electrolyte was added with mechanical stirring to 92 g of a UV-curable base having the following composition.

| **Material** | **% by weight** |
|---|---|
| Tripropylene glycol diacrylate | 10.34 |
| CN SP061 Urethane acrylate | 64.86 |
| Sartomer 9035 | 11.28 |
| Irgacure 184 | 2.82 |
| Lucerin TPO | 1.88 |
| Benzophenone | 1.88 |
| Byk defoamer 035 | 0.94 |
| Polyethylene glycol 1500 | 5 |
| Cab-o-sil M-5 | 1 |

The composition had a viscosity of 9.2 Pas at 22.2°C and was suitable for use as a screen printing ink.

### Reference Example 5

Anicol 9.3 g and 6.2 g of EMIM-ES were placed in a glass bottle. The glass bottle was heated on a water bath maintained at 65°C and stirred mechanically when the glue had melted. This composition could be processed by screen printing.

### Reference Example 6

Plakal 375 21.0 g, 7.8 g of EMIM-ES, 1.0 g glycerol, and 6.16 g titanium dioxide were placed in a glass bottle. The glass bottle was heated on a water bath maintained at 65°C and stirred mechanically when melted. Stirring continued until the titanium oxide pigment was well dispersed. This composition may be processed by screen printing.

### Reference Example 7

Anicol 18.6 g, 2.0 g of titanium dioxide and 4.2 g of polyethylene glycol 200 were dissolved in 11.3 g EMIM-ES by heating to 60°C. This composition could be screen printed while warm. On cooling, this printed composition hardened into a sticky white opaque solid.

### Reference Example 8

A bio-degradable ionic liquid gelled by animal based glue was prepared. Anicol 19.7 g was dissolved in 14.2 g of MTEOA-MS by heating to 60°C. This composition could be screen printed while warm. On cooling, this printed composition hardened into a sticky solid.

## Claims

1. An electrolyte composition comprising: an ionic liquid; a gellant wherein the gellant is a cellulose derivative and the cellulose derivative is cellulose having alkyl, hydroxyalkyl and/or carboxyalkyl substituents; and a radiation-curable base comprising (a) a radiation-curable (meth)acrylate oligomer, (b) a (meth)acrylate monomer and (c) a photoinitiator; wherein the composition has a viscosity of 0.3 Pas or higher, measured at 25°C.

2. A composition as claimed in claim 1, wherein the ionic liquid has a melting point below 100°C.

3. A composition as claimed in claim 2, wherein the ionic liquid is a room-temperature ionic liquid, which is liquid at or below 25°C.

4. A composition as claimed in any preceding claim, wherein the ionic liquid is selected from salts of alkylammonium, alkylphosphonium, *N*-alkylpyridinium, *N,N'-*dialkylimidazolium, halogenoaluminate(III) and chlorocuprate(I) cations or mixtures thereof.

5. A composition as claimed in any preceding claim, wherein the cellulose derivative is selected from ethoxylated cellulose, propoxylated cellulose and carboxymethyl cellulose.

6. A composition as claimed in any preceding claim, wherein the composition is in the form of a gel.

7. Use of the composition as claimed in any preceding claim for manufacturing an electrochemical device.

8. An electrochemical device comprising the composition as claimed in any of claims 1 to 6.

9. The electrochemical device as claimed in claim 8 comprising:
a substrate;
a first and a second layer of electrically conductive and electrochemically active material, which are spatially separated from each other and carried by the substrate;
an electrolyte composition as claimed in any of claims 1 to 6 which ionically connects the first and the second layer,
wherein the redox state of the first layer is controllable by means of a voltage applied across the electrolyte composition, and wherein the first layer is arranged such that a change of redox state alters the electrical conductivity of the first layer.

10. A method of manufacturing the electrochemical device claimed in claim 9 comprising the steps of:
providing a substrate;
arranging a first and a second layer of electrochemically active material on the substrate, wherein the layers are spatially separated from each other;
printing a layer of the electrolyte composition as claimed in any of claims 1 to 6, in ionic contact with both the first and the second layer of electrochemically active material, such that the first and second layers are ionically connected.

## Patentansprüche

1. Elektrolytzusammensetzung, umfassend: eine ionische Flüssigkeit; ein Geliermittel, wobei das Geliermittel ein Cellulosederivat ist und das Cellulosederivat Cellulose mit Alkyl-, Hydroxyalkyl- und/oder Carboxyalkylsubstituenten ist; und eine strahlungshärtbare Basis, die (a) ein strahlungshärtbares (Meth)acrylat-Oligomer, (b) ein (Meth)acrylat-Monomer und (c) einen Fotoinitiator umfasst; wobei die Zusammensetzung eine Viskosität von 0,3 Pas oder höher, bei 25 °C gemessen, aufweist.

2. Zusammensetzung nach Anspruch 1, wobei die ionische Flüssigkeit einen Schmelzpunkt unter 100 °C aufweist.

3. Zusammensetzung nach Anspruch 2, wobei die ionische Flüssigkeit eine ionische Flüssigkeit bei Raumtemperatur ist, die bei oder unter 25 °C flüssig ist.

4. Zusammensetzung nach einem vorhergehenden Anspruch, wobei die ionische Flüssigkeit aus Salzen von Alkylammonium, Alkylphosphonium, *N*-Alkylpyridinium, *N,N'*-Dialkylimidazolium, Halogenaluminat(III)- und Chlorcuprat(I)-Kationen oder Gemischen davon ausgewählt ist.

5. Zusammensetzung nach einem vorhergehenden Anspruch, wobei das Cellulosederivat aus ethoxylierter Cellulose, propoxylierter Cellulose und Carboxymethylcellulose ausgewählt ist.

6. Zusammensetzung nach einem vorhergehenden Anspruch, wobei die Zusammensetzung in der Form eines Gels ist.

7. Verwendung der Zusammensetzung nach einem vorhergehenden Anspruch zur Herstellung einer elektrochemischen Vorrichtung.

8. Elektrochemische Vorrichtung, die die Zusammensetzung nach einem der Ansprüche 1 bis 6 umfasst.

9. Elektrochemische Vorrichtung nach Anspruch 8, umfassend:
ein Substrat;
eine erste und eine zweite Schicht aus elektrisch leitfähigem und elektrochemisch aktivem Material, die räumlich voneinander beabstandet sind und von dem Substrat getragen werden;
eine Elektrolytzusammensetzung nach einem der Ansprüche 1 bis 6, die die erste und die zweite Schicht ionisch verbindet,
wobei der Redoxzustand der ersten Schicht mittels einer Spannung, die über die Elektrolytzusammensetzung angelegt wird, kontrollierbar ist und wobei die erste Schicht derart angeordnet ist, dass eine Veränderung des Redoxzustands die elektrische Leitfähigkeit der ersten Schicht ändert.

10. Verfahren zur Herstellung der elektrochemischen Vorrichtung nach Anspruch 9, das die folgenden Schritte umfasst:
Bereitstellen eines Substrats;
Anordnen einer ersten und einer zweiten Schicht aus elektrochemisch aktivem Material auf dem Substrat, wobei die Schichten räumlich voneinander beabstandet sind;
Drucken einer Schicht der Elektrolytzusammensetzung nach einem der Ansprüche 1 bis 6 in ionischem Kontakt mit sowohl der ersten als auch der zweiten Schicht aus elektrochemisch aktivem Material, so dass die erste und die zweite Schicht ionisch verbunden sind.

## Revendications

1. Composition électrolytique comprenant : un liquide ionique ;
un gélifiant, le gélifiant étant un dérivé de la cellulose, et le dérivé de la cellulose étant de la cellulose contenant des substituants alkyles, hydroxyalkyles et/ou carboxyalkyles ; et
une base durcissable par rayonnement comprenant (a) un oligomère de (méth)acrylate durcissable par rayonnement, (b) un monomère de (méth)acrylate, et (c) un photo-amorceur ; la viscosité de la composition étant égale à 0,3 Pas, ou supérieure, mesurée à 25°C.

2. Composition selon la revendication 1, le point de fusion du liquide ionique étant inférieur à 100°C.

3. Composition selon la revendication 2, le liquide ionique étant un liquide ionique à température ambiante, qui est liquide à une température égale ou inférieure à 25°C.

4. Composition selon une quelconque des revendications précédentes, le liquide ionique étant sélectionné parmi des sels d'alkylammonium, d'alkylphosphonium, de *N-*alkylpyridinium, de N,N'-dialkylimidazolium, d'halogen-aluminate(III) et chlorocuprate(I), et cations ou mélanges de ceux-ci.

5. Composition selon une quelconque des revendications précédentes, le dérivé de cellulose étant sélectionné parmi de la cellulose éthoxylée, de la cellulose propoxylée, et de la carboxyméthylcellulose.

6. Composition selon une quelconque des revendications précédentes, la composition se présentant sous forme d'un gel.

7. Utilisation de la composition selon une quelconque des revendications précédentes pour la fabrication d'un dispositif électrochimique.

8. Dispositif électrochimique comprenant la composition selon une quelconque des revendications 1 à 6.

9. Dispositif électrochimique selon la revendication 8, comprenant :
un substrat ;
une première et une deuxième couche de matière électriquement conductrice et électro-chimiquement active, séparées spatialement l'une de l'autre, et supportées par le substrat ; une composition d'électrolyte selon une quelconque des revendications 1 à 6, assurant la connexion ionique de la première couche avec la deuxième couche, l'état redox de la première couche pouvant être contrôlée par le biais d'une tension appliquée sur la composition électrolytique, et la première couche étant agencée de sorte qu'une variation de l'état redox modifie la conductivité électrique de la première couche.

10. Méthode de fabrication du dispositif électrochimique selon la revendication 9, comprenant les étapes suivantes :
production d'un substrat ;
agencement d'une première et d'une seconde couches de matière électro-chimiquement active sur le substrat, les couches étant spatialement séparées l'une de l'autre ;
impression d'une couche de la composition d'électrolyte selon une quelconque des revendications 1 à 6, en contact ionique avec à la fois la première et la deuxième couche de matière électro-chimiquement active, de sorte que les première et deuxième couches soient ioniquement connectées.
